# EUROPEAN PATENT APPLICATION

(11) **EP 4 106 123 A1**
(43) Date of publication of application: **21.12.2022**
(21) Application number: 22178643.7
(22) Date of filing: 13.06.2022
(51) Int. Cl.: H02G 7/02, H02G 7/04, H02G 7/05, G02B 6/44, G02B 6/48

(54) **A HOLDER FOR A CABLE**

(30) Priority: 17.06.2021 PL 43820121
(71) Applicant: Cellco Communications Sp. z o.o., 73-108 Kobylanka (PL)
(72) Inventor: Wieczorek, Tomasz Piotr, 72-123 Kliniska Wielkie (PL); Rybko, Micha, 72-003 Dobra Szczeci ska (PL)
(74) Representative: Balinska, Ewa

(57) **Abstract**

A holder for a cable comprising a housing (10), an insert (20) that is to be placed in the housing (10), a channel (12) for a cable extending in the housing and a catch (30) connected to the housing for hanging the holder, being characteristic by the holder further including an abutment element (11) placed within the housing (10) and including an outer surface (11b) and an inner abutment surface (11a) that are opposite to each other. Wherein the insert (20) is placed between the abutment element (11) and the inner surface (10") of the housing (10) and the insert (20) being movable towards and away from the inner abutment surface (11a) of the abutment element (11). The cable channel (12) extends in the direction of the channel extending starting from the entrance (120) to the inside of the housing (10), between the inner abutment surface (11a) of the abutment element (11), facing the insert (20) and the insert (20), and it further extends first around the insert (20), then it crosses a portion (121) of the channel between the cable entrance (120) and the abutment element (11), and then it extends at the outer surface (11b) of the abutment element (11), opposite to the inner abutment surface (11a) of the abutment element (11), facing towards the insert (20) and then extending towards the exit (124) of the housing (10).

## Description

### Technical field

The invention relates to a holder for an overhead line cable, in particular for a cable the core of which is made of optical fibres.

Such holders include an anchoring member for locking out a cable and a connecting element for connecting an anchoring element to a support bracket.

### Background

Such solutions are known, for example, from description FR2844111A1, which discloses a holder for a telecommunication cable comprising a hollow tubular body that encloses a space having decreasing cross-sectional area, a catch, and a wedge cable jamming block or pulley. The wedge jamming block is connected to the body by an elastic element, and the catch comprises a free end that can be locked into a compartment.

WO2009133250A1 discloses a holder similar to that disclosed in FR2844111A1 publication, wherein a tubular body as well as a wedge cable jamming block or pulley both comprise additionally fixing means for retaining mutual position of these both elements with respect to each other.

Publication FR3029023A1 (the priority of which is claimed by PL/EP 3026767) discloses an anchoring device for anchoring a cable including a locking element for immobilizing a cable and a connecting member for connecting the locking element to a supporting bracket. The locking element comprises a groove for housing a cable. Said groove is of an annular shape and comprises a holding segment and a transition segment. Dimensions and a configuration of said holding and transition segments are selected in such a manner that the tensile force exerted on the fourth part in the direction which causes the cable to move away from said locking element causes the third part to press against a bottom surface a segment of a second part covered by said third part.

### Problem

The problem of the prior art solutions consists in necessity to remove an insert from a holder in order to adjust a cable tension and in necessity to use additional tools in order to adjust a cable tension in such holder, as well as in slipping out a cable from a holder in changing weather conditions.

### Summary of the Invention

This problem is solved by the invention by means of a holder for a cable comprising a housing, an insert that is to be placed in said housing, a cable channel extending in this housing and a catch connected to said housing for hanging said holder, being characteristic by that said holder further comprises an abutment element positioned inside the housing and comprising an outer and an inner abutment surfaces positioned one opposite to each other.

The holder insert, when inserted, is to be positioned between the abutment element and inner surface of the housing, wherein the insert is movable in a direction towards and away from said inner abutment surface of said abutment element.

Said cable channel extends in a direction of a channel extension starting from an inlet or an entrance to an interior of the housing, between an inner abutment surface of abutment element facing the insert and said insert.

Further, this cable channel extends initially around the insert, then crosses a portion of the channel between the entrance for a cable and an abutment element.

Then the cable channel extends at the outer surface of said abutment element opposite the inner surface of this abutment element facing the insert and then finally extends towards said exit of the housing.

Preferably, the cable channel at its end portion at the housing exit extends inside the housing collinearly, in line with a direction of an axis of the catch, in such a way that the force resulting from anchoring of the catch and the cable tension force at the exit from the housing balance each other.

Preferably, the housing comprises at least one projection and the insert comprises at least one notch for receiving said projection, wherein the projection and the notch are shaped in such a manner to allow the insert to move towards and away from inner abutment surface of the abutment element.

Preferably, the insert comprises at least one projection and the housing comprises at least one notch for receiving said projection, wherein the projection and the notch are shaped in such a manner to allow the insert to move towards and away from inner abutment surface of the abutment element.

Preferably, the insert comprises a connecting element for connecting the insert to the housing.

Preferably, the abutment element is designed as divided into two parts that are separated from one another by a slot.

Preferably, a connecting element for connecting the insert to the housing is placed in said slot.

Preferably, the connecting element for connecting the insert to the housing comprises a stabilizing element for stabilizing component parts of the abutment element.

Preferably, in the channel, looking in the direction of the channel extension, a stepped part or offset part is located upstream the initial portion of the channel, which part is positioned between the cable entrance and the abutment element.

Preferably, at least one latch is provided on circumferential wall of the housing to secure the cable in the channel.

Preferably, at least one latch is provided on inner abutment surface of the abutment element to secure the cable in the channel.

Preferably, at least one latch is formed on outer surface of a circumferential wall of the insert to secure the cable in the channel.

Preferably, at least one latch is shaped on the outer surface of the circumferential wall of the insert to secure the cable in the channel.

Preferably, a latch is formed on the outer surface of the circumferential wall of the insert, opposite to the inner abutment surface, to secure the cable in the channel, wherein front surface of said latch corresponds to and reproduces the shape of the inner abutment surface of the abutment element.

Preferably, the insert and the abutment element are made hollow and equipped with internal reinforcements.

Preferably, a serrated element is provided in the end portion of the channel for mounting an anti-vibration rubber.

Preferably, a socket is provided on an outer side of the housing and the latch comprises projections at its free end for being received into said socket.

Preferably, a cable retainer or locking element is provided on the circumferential wall upstream an entrance of the channel, and a cable retainer or locking element is provided on the exit of the channel at the exit of the housing.

Preferably, the insert is made as a solid one-piece part.

Preferably, all components of the holder form a uniform assembly.

Preferably, the holder is made of plastic material such as polyamides, polyolefins, polycarbonates, copolymers.

### The beneficial effects of the invention

The solution according to present invention provides a holder thanks to which in order to adjust the cable tension in the holder, there is no need to remove an insert from the holder and to use additional tools to adjust the cable tension, whereas the cable positioned in the holder cannot slip out therefrom in changing weather conditions.

According to the invention, a cable channel is formed in the holder, wherein this channel being defined by a space delimited initially by an outer surface of circumferential wall of the insert, corresponding in shape to inner abutment surface of the abutment element, and said inner abutment surface, and then is delimited successively by an inner surface of the housing and an outer surface of circumferential wall of the insert that corresponds in shape to inner surface of the housing, next by an outer abutment surface of the abutment element that is positioned opposite said inner abutment surface of this element and said inner surface of the housing lying opposite the outer surface of the element.

The cable is to be positioned in the channel starting from the entrance of the housing, so that it extends initially in the channel between the inner abutment surface of the abutment element and the insert, and then it encircles the insert and is directed along the channel further through the stepped part located upstream the channel entrance to an interior of the housing. Thanks to said stepped part, the cable positioned in the channel, passing through the initial portion of the channel, passes over and above this part of the cable that is already arranged in the initial portion of the channel. Thus, due to the stepped part the cable path in the channel is modelled and shaped with this stepped part so that the cable does not press against itself. This ensures that the part of the cable exiting the holder extends on a level that is higher than a level of this part of the cable that enters the holder at the entrance. After passing through the stepped part and passing by the initial portion of the channel, the cable is located between the outer abutment surface and the inner surface of the housing and then it is led out of the holder through a portion of the channel shaped collinearly in line with the direction of the axis of the catch in such a way that both forces, that is the force resulting from anchoring of the catch and the cable tension force at the exit from the housing balance each other.

Configuration of the holder according to the invention allows the cable to be arranged inside the channel so that it wraps around the movable insert, and that pulling the cable at the exit from the housing results in moving the insert towards the abutment element, thereby reducing the space between the insert and the inner abutment surface of the abutment element and thus clamping the cable inside the holder.

Thanks to the pressure provided by the movable insert the cable does not slip out of the holder, and no additional tool is required to adjust it.

### Figures of the drawing

The object of the invention is shown in the embodiment in the drawing, in which:
Fig. 1 shows a perspective view of the holder with the insert removed - as seen from a side of the inner abutment surface of the abutment element.
Fig. 2 is a top view of the holder with the insert removed.
Fig. 3 shows the holder with the insert removed - perspective view from the catch side.
Fig. 4 is a bottom view of the holder with the insert removed.
Fig. 5 shows the holder with the insert inserted - a perspective view as seen from the side of the inner abutment surface of the abutment element showing a path of the cable channel indicated.
Fig. 6 shows the holder with the insert inserted - a perspective view as seen from the catch side.

### Embodiment

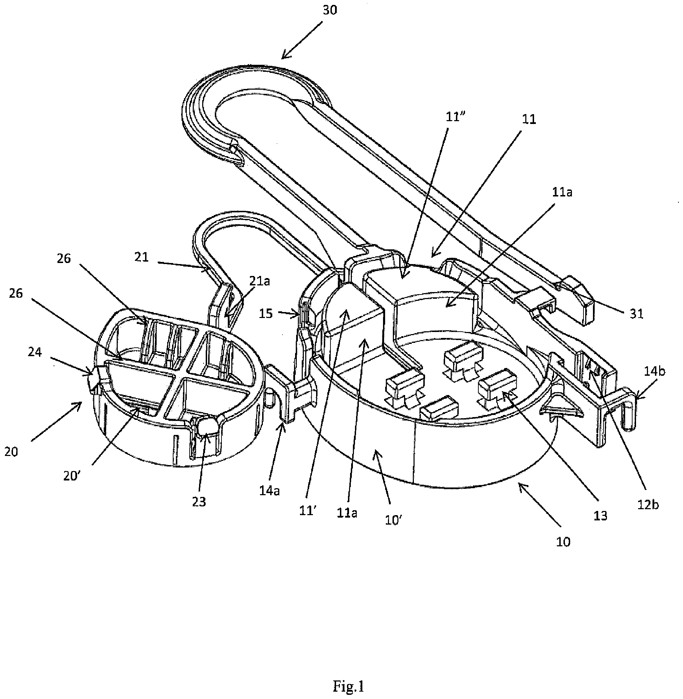

An object of the present invention is shown in an exemplary embodiment in the drawing, in which Fig. 1 shows a holder for a cable (not shown), including a housing 10 with an insert 20 that is to be inserted and arranged in said housing 10 and a catch 30 connected to said housing for hanging the holder on support brackets, such as e.g. a hook and/or eye brackets. Wherein a socket 31 is provided on an outer side of the housing for anchoring a free end 32 of the catch 30 therein. Said anchoring of the free end 32 of the catch 30 in said socket 31 can be performed by means of projections 33 engaging respective latches 34 in such socket 31.

The holder according to the invention further comprises an abutment element 11 located inside the housing 10. Such abutment element comprises an inner abutment surface 11a and an outer abutment surface 11b, both lying one opposite each other. The insert 20 can be arranged and inserted into the housing 10 in a position between the abutment element 11 and inner surface 10" of the housing 10, wherein the insert 20 when inserted and positioned in the housing 10 is movable and performs reciprocating motion towards and away from the inner abutment surface 11a of the abutment element 11.

In the embodiment, the channel 12 in which a cable can be received and arranged is defined as the space defined and delimited in succession by an outer surface 20' of circumferential wall of the insert 20, corresponding with its shape to a shape of the inner abutment surface 11a of the abutment element 11, and this inner abutment surface 11a; next by the inner surface 10" of the housing 10 and an outer surface of said circumferential wall of the insert 20 which surface corresponds in shape to the shape of the inner surface 10" of the housing 10; then by said outer surface 11b of the abutment element 11 which lays opposite the inner abutment surface 11a of this element and the inner surface 10" of the housing 10 lying opposite the outer surface 11b of the abutment element 11.

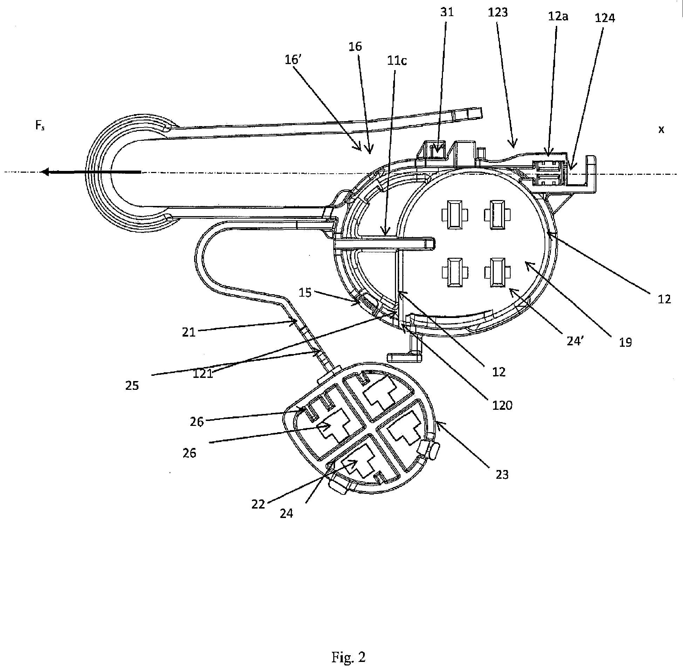

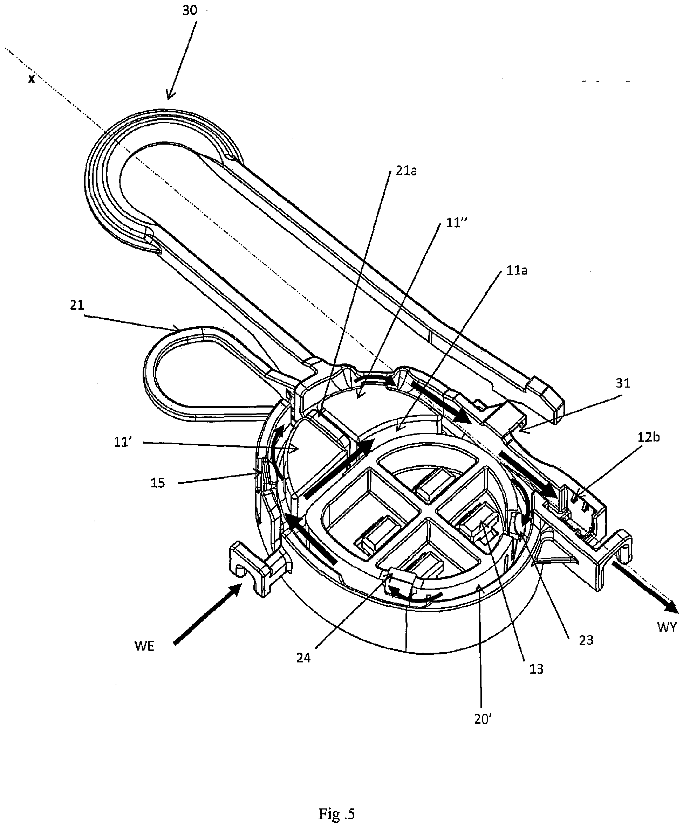

The channel 12, in which the cable is to be received, extends in the direction of extension of the channel as shown by the arrows in Fig. 5 starting from the point in which the cable enters the interior of the housing, namely an entrance 120, between the inner abutment surface 11a of the abutment element 11 facing the insert 20, and said insert 20. Next, the cable channel 12 initially runs around the insert 20 and then crosses a portion 121 of the cable channel 12 between the entrance 120 and the abutment element 11. The cable channel 12 then extends at the outer surface 11b of the abutment element 11, opposite the inner abutment surface 11a facing the insert 20. Further, the channel 12, after exiting the space defined by the outer surface 11b being opposite the inner abutment surface 11a facing the insert 20 and the inner surface 10" of the housing 10 being opposite the outer surface 11b, runs towards the exit 124 of the holder housing 10 in such a way that pulling the cable arranged in the above described channel 12 at the exit of the housing 10 effects in causing the insert 20 to move towards the inner abutment surface 11a of the abutment element and to clamp the cable located between the inner abutment surface 11a of the abutment element 11 and the insert 20. Wherein the channel 12 is provided, in its end portion 123 at the exit of the housing 10 to run passing co-linearly inside the housing, that is in-line with the direction of the x-axis (indicated in Fig. 2) of the catch 30, indicated in Fig. 2 in such a way that the force Fₛ resulting from attaching the catch 30 to the brackets pole, e.g. hook and/or eye brackets and the cable tension force at the exit from the housing 10 balance each other.

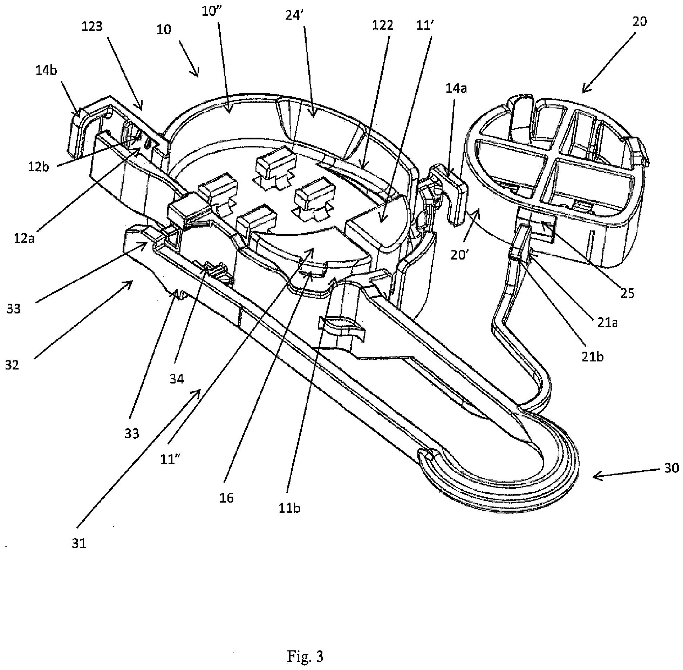

Fig. 2 shows in a top view of the holder, that the circumferential wall 10' comprises a notch which constitutes the entrance 120 for a cable to be introduced into the channel 12. An initial portion 121 of the channel 12 extends between the cable entrance 120 and the abutment element 11, as seen in the extension direction of the channel 12. Moreover, a stepped part 122 shown in Figures 2 and 3 is located upstream the initial portion 121 of the channel 12, in the space between the outer surface 20' of the insert 20 and the inner surface 10" of the housing 10. Thanks to this stepped part (offset part) the cable positioned in the channel, after passing through the initial portion of the channel after encircling the insert 20, passes over and above the part of the cable that has been already positioned in the initial portion 121 of the channel 12. Thus, due to the stepped part 122 the cable path in the channel 12 is modelled by means of said stepped part 122 so that the cable does not press on itself. This ensures that the part of the cable exiting the holder is positioned on a level that is located higher than and above the part of the cable entering the holder at the entrance 120.

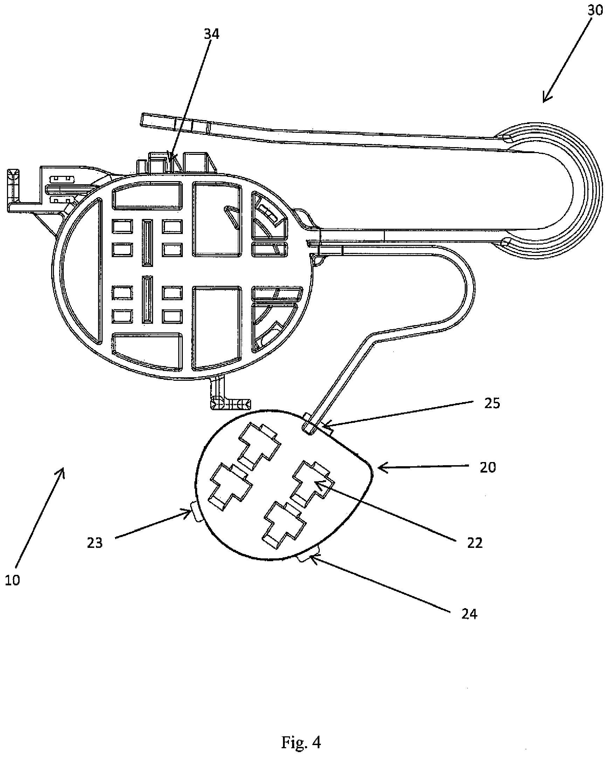

Fig. 2 shows that the holder in the embodiment comprises at least one protrusion 13, preferably four protrusions 13, positioned in the housing 10, and that the insert 20 comprises at least one notch 22, preferably four notches 22 (shown in Figs. 2 and 4), which serve to receive the protrusions 13 of the housing 10 therein, wherein the notches 22 and the protrusions 13 are formed such that movement of the insert 20 in a direction towards and away from the inner abutment surface 11a of the abutment element 11 is possible. That means, the notches 22 and the protrusions 13 together constitute a guide guiding the insert 20 in its motion towards and away from the inner abutment surface 11a of the abutment element 11 and at the same time securing the insert 20 from falling out of the housing 10. By using the similar means and principle, it is also possible to manufacture the insert 20 equipped with projections 13 and the housing equipped with notches 22. It is also possible to provide combination of projections 13 and notches 22 respectively in both the insert 20 and the housing 10.

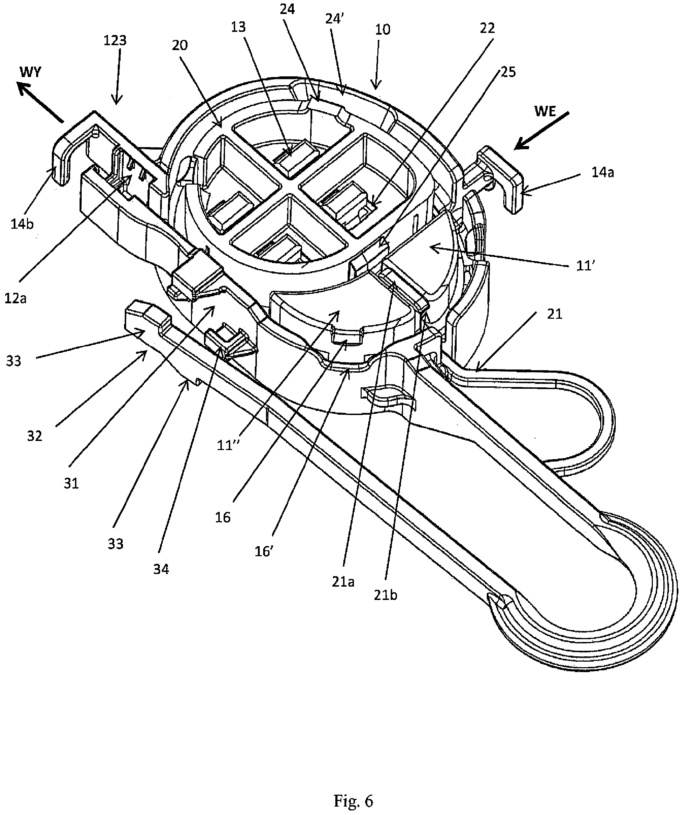

The abutment element 11 can be designed as a one-piece element or it can be designed as two-parts element comprising two parts 11' and 11" separated one from each other by means of a slot 11c. The insert 20 may be connected to the housing 10 of the holder by a flexible connector or connecting element 21. It is provided that the connecting element 21 can comprise a stabilizing element 21a. In this embodiment, when the insert 20 is arranged in the housing 10 between the inner abutment surface 11a and the inner surface 10' of the housing 10, the connecting element 21 together with the stabilizing element 21a are placed in the slot 11c, so that the insert 20 is additionally stabilized in the housing 10 and thus a deformation of the components of the housing 10, in particular the parts 11' and 11" of the abutment element 11 - such as bending towards each other - and falling of the cable out from the housing 10 under load caused by the cable tension in the channel 12 are thus prevented. A portion of the connecting element 21 located inside the housing 10 between the outer surface 11b and the inner surface 10" of the housing 10 lays on a bottom of the channel 12 in such a way that a cable part extending in this point of the channel 12 passes over above this portion of the connecting element 21. The element 21a stabilizes the surfaces parallel with respect to the notch 11c of the elements 11' and 11". Additionally the element 21a, on its side opposite to the element 20, comprises a tooth 21b which, after assembling the holder and clamping the cable, slides out of the slot 11c towards the outer surface 11b, additionally securing the cable against falling out. The position of the notch 21b when the insert is inserted is shown in Fig. 6. At the same time, during inserting the cable into the channel 12 starting from the entrance 120 side, when the element 20 is maximally ejected towards the surface 10", the side of the element 21a lying on opposite side with respect to the tooth 21b, faces the inner surfaces 11a of both parts 11' and 11" of the abutment element 11.

Moreover, the cable in the channel 12 can be secured against falling out by additional latches 15, 16, 23, 24 and 25 shown in Figs. 1, 2 and 3. At least one latch 15 is disposed on the circumferential wall 10' of the housing 10. At least one latch 23 and at least one latch 24 are formed on the outer surface 20' of the insert 20. Whereby a recess 24' is formed in the inner surface 10' of the housing 10 opposite the latch 24 to facilitate insertion of the cable into the channel 12. The outer surface 20' of the insert 20 is equipped with a latch 25, positioned above the connection point between the flexible connecting element 21 and the insert 20. The face of the latch 25 reproduces the shape of the inner abutment surface 11a of the abutment element 11. The latch 25 presses with its face against the inner abutment surface 11a and protects the cable against excessive pressure under load. The abutment element 11 comprises at least one latch 16 on its outer surface 11b opposite the inner abutment surface 11a facing the insert 20 to secure the cable. Whereby a recess 16' is formed in the inner wall of the housing 10 lying opposite the latch 16 to facilitate insertion of the cable into the channel 12. The latches 15 and 23 are flexible latches that deflect when inserting the cable into the channel 12, whereas the latches 16, 24 and 25 are rigid latches that secure the cable to the surfaces on which it is clamped. Alternatively, the flexible latches 15 and 23 may be designed as rigid latches. In addition, the recesses 24' and 16' have the function of allowing the cable to be passed under the latch 24 and 16, respectively, without deflecting it, and may be shaped in such a way that they can be used to drain the water accumulated in the holder during rain.

In addition, in the end portion 123 of the channel 12 shown in Fig 3, a serrated element 12a with teeth 12b is provided for mounting an anti-vibration rubber (not shown). An element 14a may be provided on the wall of the housing 10' at the entrance 120 to secure a cable at the entrance 120 against the interior of the housing 10. On the other hand, the cable can be additionally stabilized and prevented from falling out from the housing by means of the retaining element 14b, at the exit from the housing on the side of the end portion 123 of the channel 12. Moreover, stripes can be formed on the outer surface 20' of the insert 20, that strips additionally stabilize the cable in the channel 12.

Moreover, it can be provided that the insert 20 is designed as an element comprising additional internal reinforcements 26 in the form of ribs and/or supports. Also, the abutment element 11 can comprise additional reinforcements in the form of ribs.

All components of the holder can be manufactured as a uniform or one-piece assembly by way of, for example, an injection moulding process, and the material of the holder can be plastics such as, for example, polyamides, polyolefins, polycarbonates, copolymers, and the like.

Depending on a type of the cable arranged in the holder, different bending radius values are provided for the individual components of the holder. The minimum recommended static bending diameter, e.g., for an A1 fibre optic cable, is 30 mm. In an exemplary embodiment, the lowest value of a diameter is 45 mm. The holder can be scaled up to accept receiving cables of different thickness.

Fig. 5 and Fig. 6 show the holder in the assembled state with the insert 20 arranged and placed in the housing 10. The cable, which is arranged in the channel 12, is introduced into the ready for use holder, in accordance with the symbols WE, WY and the arrows in Fig 5. The cable extends inside the housing around the inserted insert 20, and next it runs between the outer surface 11b and the inner surface 10" of the housing 10 and is brought outside the holder. Even a single winding generates sufficient clamping force to securely fix the cable in the holder. It is also allowable to make more than one winding of the cable.

In operation, when the cable exits the housing 10, an initial tension is generated that is resulting from the weight of the cable hanged between the successive lashings and the elasticity of the connecting element 21, then the cable is clamped between the portion of the insert 20 and the abutment element 11. In such a way a lever is created that prevents the cable from slipping inside the holder.

The excess sag of the cable between successive lashings-poles can be adjusted by pulling it in the opposite direction to the direction of insertion of the cable into the channel indicated with arrows WE, WY in Figs. 5 and 6, wherein the force needed for adjustment is small and the adjustment does not require the use of any additional tools, nor removing the insert from the housing. When adjusting the cable, one only needs to balance the tension in the cable, no additional force is required, and the cable is immediately after adjustment clamped in the holder.

## Claims

1. A holder for a cable comprising
- a housing (10),
- an insert (20) that is to be arranged in the housing (10) and
- a cable channel (12) for a cable extending through the housing and a catch (30) connected to the housing for hanging the holder
**characterized in that**
the holder further includes an abutment element (11) provided within the housing (10) and comprising an outer surface (11b) and inner abutment surface (11a) positioned one opposite to each other,
wherein the insert (20) is to be positioned between the abutment element (11) and inner surface (10") of the housing (10),
wherein the insert (20) is movable in a direction towards and away from the inner abutment surface (1 1a) of the abutment element (11),
and the cable channel (12) extends in the direction of extension of said channel starting from an entrance (120) into the interior of the housing (10), between the inner abutment surface (11a) of the abutment element (11) facing the insert (20) and such insert (20)
and further it extends initially around the insert (20), then crosses a portion (121) of the channel between the entrance (120) of the cable and the abutment element (11) and then it extends
at the outer surface (11b) of the abutment element (11), opposite the inner abutment surface (11a) of the abutment element (11) facing the insert (20),
and it then finally extends towards an exit (124) of the housing (10).

2. The holder for a cable according to claim 1 **characterized in that** the end portion (123) of the channel (12) at the exit (124) from the housing (10) extends inside the housing (10) co-linearly with respect to a direction of the axis (x) of the catch (30), in such a way that the force (F_{S}) resulting from anchoring of the catch (30) and the tension force of the cable at the exit (124) from the housing (10) balance each other.

3. The holder for a cable according to any one of the preceding claims **characterized in that** the housing (10) comprises at least one projection (13), the insert (20) comprises at least one notch (22) for receiving the projection (13), wherein the projection (13) and the notch (22) are shaped to allow movement of the insert (20) towards and away from the inner abutment surface (11a) of the abutment element(11).

4. The holder for a cable according to claim 1 or 2 **characterized in that** the insert (20) comprises at least one projection (13), the housing (10) comprises at least one notch (22) for receiving said projection, wherein the projection (13) and the notch (22) are shaped to allow movement of the insert (20) towards and away from the inner abutment surface (11a) of the abutment element (11).

5. The holder for a cable according to any one of the preceding claims **characterized in that** the insert (20) comprises a connecting element (21) connecting the insert (20) to the housing (10).

6. The holder for a cable according to any one of the preceding claims **characterized in that** the abutment element (11) is made as divided into two separate parts (11') and (11") that are separated one another by a slot (11c).

7. The holder for a cable according to claim 6 **characterized in that** the connecting element (21) connecting the insert (20) to the housing (10) is to be arranged in the slot (11c).

8. The holder for a cable according to claim 7 **characterized in that** the connecting element (21) that connects the insert (20) to the housing (10) comprises an element (21a) stabilizing the said parts (11') and (11") of the abutment element (11).

9. The holder for a cable according to any one of the preceding claims **characterized in that** a stepped element (122) is located in the channel (12), when viewed in the direction of extension of the channel (12), upstream its initial portion (121) located between the entrance (120) for the cable and the abutment element (11).

10. The holder for a cable according to any one of the preceding claims **characterized in that** at least one latch (15) is provided on the circumferential wall (10') of the housing (10) to secure the cable in the channel (12).

11. The holder for a cable according to any one of the preceding claims **characterized in that** at least one latch (16) is provided on the outer surface (11b) of the element (11) to secure the cable in the channel (12).

12. The holder for a cable according to any one of the preceding claims **characterized in that** at least one latch (23) is formed on outer surface (20') of the circumferential wall of the insert (20) to secure the cable in the channel (12).

13. The holder for a cable according to any one of the preceding claims **characterized in that** at least one latch (24) is formed on the outer surface (20') of the circumferential wall of the insert (20) to secure the cable in the channel (12).

14. The holder for a cable according to any one of the preceding claims **characterized in that** a latch (25) is formed on the outer surface (20') of the circumferential wall of the insert (20), that is opposite to the inner abutment surface (11a) to secure the cable in the channel (12), wherein the face of the latch (25) corresponds to and reproduces the shape of the inner abutment surface (11a) of the abutment element (11).

15. The holder for a cable according to any one of the preceding claims **characterized in that** the insert (20) and the abutment element (11) are made hollow and equipped with internal reinforcements.

16. The holder for a cable according to any one of the preceding claims **characterized in that** a serrated element (12a) with teeth (12b) is provided in the end portion (123) of the channel (12) for mounting an anti-vibration rubber.

17. The holder for a cable according to any one of the preceding claims **characterized in that** a socket (31) is provided on the outer side of the housing (10) and the catch (30) comprises protrusions (33) at its free end (32) for being received into this socket (31).

18. The holder for a cable according to any one of the preceding claims **characterized in that** a cable retaining element (14a) is provided on the circumferential wall (10') upstream the entrance to the channel (12) and a cable retaining element (14b) is provided at the exit of the channel (12) at the exit of the housing (10).

19. The holder for a cable according to any one of the preceding claims **characterized in that** the insert (20) is made as a solid one-piece element.

20. The holder for a cable according to any one of the preceding claims **characterized in that** all components of the holder define altogether a uniform assembly.

21. The holder for a cable according to any one of the preceding claims **characterized in that** it is made of plastic materials such as polyamides, polyolefins, polycarbonates, copolymers.
